# EUROPEAN PATENT APPLICATION

(11) **EP 4 538 908 A1**
(43) Date of publication of application: **16.04.2025**
(21) Application number: 23829535.6
(22) Date of filing: 27.03.2023
(51) Int. Cl.: G06F 17/11

(54) **TARGET FUNCTION SOLVING METHOD AND APPARATUS BASED ON CLOUD COMPUTING TECHNOLOGY AND COMPUTING DEVICE**

(30) Priority: 01.07.2022 CN 202210773918; 07.09.2022 CN 202211089130
(71) Applicant: Huawei Cloud Computing Technologies Co., Ltd., Guiyang, Guizhou 550025 (CN); University of Science and Technology of China, Hefei Anhui 230026 (CN)
(72) Inventor: LI, Xijun, Guiyang, Guizhou 550025 (CN); LI, Jianshu, Guiyang, Guizhou 550025 (CN); WANG, Zhihai, Guiyang, Guizhou 550025 (CN); ZENG, Jia, Guiyang, Guizhou 550025 (CN); WANG, Jie, Guiyang, Guizhou 550025 (CN)
(74) Representative: Körber, Martin Hans
(86) International application number: PCT/CN2023/084031
(87) International publication number: WO 2024/001344

(57) **Abstract**

A method and an apparatus for solving an objective function based on a cloud computing technology, and a computing device are disclosed. The method is applied to a cloud management platform. The method includes: The cloud management platform obtains user data uploaded by a tenant; determines, based on a first artificial intelligence AI model, a first cutting plane set corresponding to the user data; performs solving based on the first cutting plane set and an objective function included in the user data to obtain a solving result of the objective function; and provides the solving result for the tenant or saves the solving result in a storage module of the cloud management platform. The first cutting plane set is N cutting planes selected by the first AI model from M candidate cutting planes, the M candidate cutting planes are a plurality of constraints used to solve the objective function, M and N are positive integers, and N is less than M. In the method, a cutting plane set for the objective function in the user data is selected from the M candidate cutting planes based on an artificial intelligence AI model to improve solving performance of the objective function.

## Description

This application claims priority to Chinese Patent Application No. 202210773918.4, filed with the China National Intellectual Property Administration on July 1, 2022 and entitled "CUTTING PLANE SELECTION METHOD AND APPARATUS", and claims priority to Chinese Patent Application No. 202211089130.8, filed with the China National Intellectual Property Administration on September 7, 2022 and entitled "METHOD AND APPARATUS FOR SOLVING OBJECTIVE FUNCTION BASED ON CLOUD COMPUTING TECHNOLOGY, AND COMPUTING DEVICE", which are incorporated herein by reference in their entireties.

### TECHNICAL FIELD

This application relates to the field of cloud computing, and more specifically, to a method and an apparatus for solving an objective function based on a cloud computing technology, and a computing device.

### BACKGROUND

Operational research mainly uses mathematical methods to study optimization methods and schemes for various systems, and provides a scientific decision-making basis for a decision maker. Mathematical programming is an important branch of operational research, and mainly studies how to find, by using an objective (or an objective function), an optimal solution that can minimize or maximize a function in a given area. To solve a mathematical programming problem, a dedicated software system, that is, a mathematical programming solver (which may also be referred to as a solver for short) is developed in the industry for linear, integer, mixed integer, and various nonlinear programming models.

The solver includes a cutting plane module. The cutting plane module generates a series of constraints, which are referred to as a candidate cutting plane set. However, if all candidate cutting planes are added to a process of solving the objective function, a solution burden is increased, and a purpose of accelerating optimal solution cannot be achieved. Therefore, the cutting plane module needs to select a part of cutting planes from the set of these candidate cutting planes, and add the part of cutting planes to the process of solving the objective function. In the foregoing process of cutting plane selection, a feasible domain for searching for an optimal solution by using the objective function may be narrowed down to accelerate the optimal solution. The process of selection may also be referred to as cutting plane selection.

In a related technical solution, the foregoing process of cutting plane selection is performed according to a heuristic rule. In other words, in this technical solution, a plurality of evaluation indicators, for example, an objective parallelism degree, an integer support degree, and a distance to an optimal solution of linear programming, are designed based on expert knowledge. All the candidate cutting planes are scored, and finally a part of cutting planes with high scores are selected from the candidate cutting planes and added to the process of solving the objective function. Such a method is designed highly depending on the expert knowledge. If a cutting plane is selected from a candidate cutting plane set by using a same set of rules for all objective functions, a problem of poor rule universality exists, and solving performance of a corresponding objective function is not optimal. If a set of rules is specially designed for a type of objective functions, expert design costs are too high. This is unacceptable in actual application.

Therefore, how to improve the solving performance of the objective function becomes a technical problem that needs to be urgently resolved.

### SUMMARY

This application provides a method and an apparatus for solving an objective function based on a cloud computing technology, and a computing device. In the method, a cutting plane set for an objective function in user data is selected from M candidate cutting planes based on an artificial intelligence AI model to improve solving performance of the objective function.

According to a first aspect, a method for solving an objective function based on a cloud computing technology is provided. The method is applied to a cloud management platform. The method includes: The cloud management platform obtains user data uploaded by a tenant; determines, based on a first artificial intelligence AI model, a first cutting plane set corresponding to the user data; performs solving based on the first cutting plane set and an objective function included in the user data to obtain a solving result of the objective function; and provides the solving result for the tenant or saves the solving result in a storage module of the cloud management platform. The user data includes the objective function and constraint information, the first cutting plane set is N cutting planes selected by the first AI model from M candidate cutting planes, the M candidate cutting planes are a plurality of constraints used to solve the objective function, M and N are positive integers, and N is less than M.

In the foregoing technical solution, a cutting plane set for the objective function in the user data may be selected from the M candidate cutting planes based on the first AI model. Because the selected cutting plane set is determined for the objective function in the user data, the solving performance of the corresponding objective function is also optimal. In addition, compared with the design of a set of rules for the objective function by using expert knowledge, expert design costs can be saved. This is easier to be accepted in practical application.

With reference to the first aspect, in some implementations of the first aspect, the cloud management platform may further determine the first AI model input or selected by the tenant, and generate the M candidate cutting planes based on the objective function and the constraint information. The cloud management platform may further determine, based on the first AI model, a cutting plane selection proportion corresponding to the objective function, and select the N cutting planes from the M candidate cutting planes as the first cutting plane set based on the cutting plane selection proportion. An input of the first AI model includes the objective function, the constraint information, and the M candidate cutting planes.

In the foregoing technical solution, compared with a fixed cutting plane selection proportion, the foregoing adaptive cutting plane selection proportion learned based on a feature of the objective function and feature of a candidate cutting plane can help learn a globally optimal cutting plane selection proportion, thereby achieving full search in an action full space, and avoiding falling into a local optimal solution.

With reference to the first aspect, in some implementations of the first aspect, the first AI model is any one of the following: a neural network model, a decision tree model, and a logistic regression model.

With reference to the first aspect, in some implementations of the first aspect, the cloud management platform may further perform dimensionality reduction processing on the objective function based on a second AI model to obtain a low-dimensional representation of the objective function; and/or the cloud management platform may further perform dimensionality reduction processing on the constraint information based on the second AI model to obtain a low-dimensional representation of the constraint information; and/or the cloud management platform may further perform dimensionality reduction processing on the M candidate cutting planes based on the second AI model to obtain low-dimensional representations of the M candidate cutting planes.

With reference to the first aspect, in some implementations of the first aspect, the input of the first AI model includes the low-dimensional representation of the objective function, the low-dimensional representation of the constraint information, and the low-dimensional representations of the M candidate cutting planes.

In the foregoing technical solution, dimensionality reduction processing is performed on input information of the first AI model to obtain a low-dimensional representation of the input information, thereby reducing processing complexity of the first AI model.

With reference to the first aspect, in some implementations of the first aspect, the second AI model is any one of the following: a graph convolutional neural network and a principal component analysis model.

With reference to the first aspect, in some implementations of the first aspect, the cloud management platform may further determine, based on a third AI model, an adding order of the N cutting planes included in the first cutting plane set, where an input of the third AI model is the M candidate cutting planes and the cutting plane selection proportion that corresponds to the objective function.

In the foregoing technical solution, the adding order of the N cutting planes in the first cutting plane set is determined, so that the N cutting planes are added in an order, thereby improving efficiency of solving the objective function.

With reference to the first aspect, in some implementations of the first aspect, the third AI model is any one of the following: a pointer network model, a regression model, and a decision tree model.

With reference to the first aspect, in some implementations of the first aspect, the cloud management platform may further provide any one or a combination of the following information for the tenant: the cutting plane selection proportion corresponding to the objective function, the N cutting planes in the first cutting plane set, and the adding order of the N cutting planes.

With reference to the first aspect, in some implementations of the first aspect, the first AI model is obtained by the cloud management platform through training based on the objective function, the constraint information, the M candidate cutting planes, and the cutting plane selection proportion that corresponds to the objective function.

According to a second aspect, a cutting plane selection apparatus is provided. The apparatus is used in a cloud management platform. The apparatus includes: an obtaining module, a determining module, and a solving module. The obtaining module is configured to obtain user data uploaded by a tenant. The determining module is configured to determine, based on a first AI model, a first cutting plane set corresponding to the user data. The solving module is configured to: perform solving based on the first cutting plane set and an objective function to obtain a solving result of the objective function, and provide the solving result for the tenant and/or save the solving result. The user data includes the objective function and constraint information. The first cutting plane set includes N cutting planes. The first cutting plane set is the N cutting planes selected by the first AI model from M candidate cutting planes. The M candidate cutting planes are a plurality of constraints used to solve the objective function.

With reference to the second aspect, in some implementations of the second aspect, the apparatus further includes: a generation module. The determining module is further configured to determine the first AI model input or selected by the tenant. The generation module is configured to generate the M candidate cutting planes based on the objective function and the constraint information. The determining module is further configured to determine, based on the first AI model, a cutting plane selection proportion corresponding to the objective function. The determining module is further configured to select the first cutting plane set from the M candidate cutting planes based on the cutting plane selection proportion. An input of the first AI model includes the objective function, the constraint information, and the M candidate cutting planes.

With reference to the second aspect, in some implementations of the second aspect, the first AI model is any one of the following: a neural network model, a decision tree model, and a logistic regression model.

With reference to the second aspect, in some implementations of the second aspect, the apparatus further includes: a dimensionality reduction module, configured to perform dimensionality reduction processing on the objective function based on a second AI model to obtain a low-dimensional representation of the objective function; and/or configured to perform dimensionality reduction processing on the constraint information based on the second AI model to obtain a low-dimensional representation of the constraint information; and/or configured to perform dimensionality reduction processing on the M candidate cutting planes based on the second AI model to obtain low-dimensional representations of the M candidate cutting planes.

With reference to the second aspect, in some implementations of the second aspect, the input of the first AI model includes the low-dimensional representation of the objective function, the low-dimensional representation of the constraint information, and the low-dimensional representations of the M candidate cutting planes.

With reference to the second aspect, in some implementations of the second aspect, the second AI model is any one of the following: a graph convolutional neural network and a principal component analysis model.

With reference to the second aspect, in some implementations of the second aspect, the determining module is further configured to determine, based on a third AI model, an adding order of the N cutting planes included in the first cutting plane set, where an input of the third AI model is the M candidate cutting planes and the cutting plane selection proportion that corresponds to the objective function.

With reference to the second aspect, in some implementations of the second aspect, the third AI model is any one of the following: a pointer network model, a regression model, and a decision tree model.

With reference to the second aspect, in some implementations of the second aspect, the apparatus further includes: a sending module, configured to provide any one or a combination of the following information for the tenant: the cutting plane selection proportion corresponding to the objective function, the N cutting planes in the first cutting plane set, and the adding order of the N cutting planes.

With reference to the second aspect, in some implementations of the second aspect, the first AI model is obtained by the cloud management platform through training based on the objective function, the constraint information, the M candidate cutting planes, and the cutting plane selection proportion that corresponds to the objective function.

According to a third aspect, a computing device is provided, including a processor and a memory, and optionally, further including an input/output interface. The processor is configured to control the input/output interface to receive and send information. The memory is configured to store a computer program. The processor is configured to invoke the computer program from the memory and run the computer program, so that the processor performs the method according any one of the first aspect or the possible implementations of the first aspect.

Optionally, the processor may be a general-purpose processor, and may be implemented by using hardware or software. When implemented by using hardware, the processor may be a logic circuit, an integrated circuit, or the like. When implemented by using software, the processor may be a general-purpose processor, and is implemented by reading software code stored in the memory. The memory may be integrated into the processor, or may be located outside the processor and exist independently.

According to a fourth aspect, a computing device cluster is provided, including at least one computing device. Each computing device includes a processor and a memory. The processor of the at least one computing device is configured to execute instructions stored in the memory of the at least one computing device, so that the computing device cluster performs the method according to any one of the first aspect or the possible implementations of the first aspect.

According to a fifth aspect, a chip is provided. The chip obtains instructions and executes the instructions to implement the method according to any one of the first aspect or the implementations of the first aspect.

Optionally, in an implementation, the chip includes a processor and a data interface. The processor reads, through the data interface, instructions stored in a memory to perform the method according to any one of the first aspect or the implementations of the first aspect.

Optionally, in an implementation, the chip may further include a memory. The memory stores instructions. The processor is configured to execute the instructions stored in the memory. When the instructions are executed, the processor is configured to perform the method according to any one of the first aspect or the implementations of the first aspect.

According to a sixth aspect, a computer program product including instructions is provided. When the instructions are run by a computing device, the computing device is enabled to perform the method according to any one of the first aspect or the implementations of the first aspect.

According to a seventh aspect, a computer program product including instructions is provided. When the instructions are run by a computing device cluster, the computing device cluster is enabled to perform the method according to any one of the first aspect or the implementations of the first aspect.

According to an eighth aspect, a computer-readable storage medium is provided, including computer program instructions. When the computer program instructions are executed by a computing device, the computing device performs the method according to any one of the first aspect or the implementations of the first aspect.

In an example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a nonvolatile storage medium.

According to a ninth aspect, a computer-readable storage medium is provided, including computer program instructions. When the computer program instructions are executed by a computing device cluster, the computing device cluster performs the method according to any one of the first aspect or the implementations of the first aspect.

In an example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a nonvolatile storage medium.

### BRIEF DESCRIPTION OF DRAWINGS

FIG. 1 is a schematic flowchart of a method for solving an objective function based on a cloud computing technology according to an embodiment of this application;
FIG. 2 is a schematic flowchart of another method for solving an objective function based on a cloud computing technology according to an embodiment of this application;
FIG. 3 is a schematic flowchart of an AI model training method according to an embodiment of this application;
FIG. 4 is a schematic block diagram of a form of interaction between a tenant and an AI basic development platform according to an embodiment of this application;
FIG. 5 is a schematic block diagram of parallel data training in an AI model training process according to an embodiment of this application;
FIG. 6 is a schematic block diagram of parallel model training in an AI model training process according to an embodiment of this application;
FIG. 7 is a diagram of AI model deployment according to an embodiment of this application;
FIG. 8 is a diagram of providing an online service by an AI model according to an embodiment of this application;
FIG. 9 is a schematic block diagram of an apparatus 900 for solving an objective function based on a cloud computing technology according to an embodiment of this application;
FIG. 10 is a diagram of an architecture of a computing device 1000 according to an embodiment of this application;
FIG. 11 is a diagram of an architecture of a computing device cluster according to an embodiment of this application; and
FIG. 12 is a diagram showing that computing devices 1000A and 1000B are connected via a network according to an embodiment of this application.

### DESCRIPTION OF EMBODIMENTS

The following describes technical solutions in this application with reference to the accompanying drawings.

Each aspect, embodiment, or feature is presented in this application with reference to a system including a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

The service scenario described in embodiments of this application is intended to describe the technical solutions in embodiments of this application more clearly, and does not constitute a limitation on the technical solutions provided in embodiments of this application. A person of ordinary skill in the art may know that with evolution of network architectures and emergence of new service scenarios, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to this embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a-b, a-c, b-c, or a-b-c, where a, b, and c may be singular or plural.

For ease of understanding, terms and concepts related to embodiments of this application are first described.

### 1. Operational research

Operational research is a new interdisciplinary subject developed in the 30s and 40s of the 20^{th} century. It mainly studies use and programming of various resources by human beings to maximize benefits of limited resources and achieve an overall optimal goal under a constraint.

### 2. Mathematical programming (mathematical programming)

Mathematical programming is a branch of mathematics, and mainly studies how to find, by using an objective, an optimal solution that can minimize or maximize a function in a given area. Mathematical programming may be divided into many different branches, such as linear programming, integer programming, nonlinear programming, combinatorial optimization, multi-objective programming, random programming, dynamic programming, and parameter programming.

### 3. Linear programming (linear programming)

Linear programming is an important branch of operational research with early research, rapid development, wide application, and mature methods. Linear programming is a mathematical method that assists people in scientific management. Linear programming is a mathematical theory and method studying an extremum problem of a linear objective function under linear constraints.

### 4. Mixed integer linear programming (mixed integer linear programming, MILP)

Mixed integer linear programming is a linear programming problem in which some decision variables are limited to integers.

### 5. Mathematical programming solver (mathematical programming solver)

Mathematical programming solver may also be referred to as a solver for short, and is a software system for solving linear, integer, mixed integer, and various nonlinear programming models that have been established.

### 6. Cutting plane

The cutting plane is a series of constraints, and the constraints are added to an original problem to narrow down a solution feasibility domain and obtain an optimal solution of the original problem.

Operational research mainly uses mathematical methods to study optimization methods and schemes for various systems, and provides a scientific decision-making basis for a decision maker. Mathematical programming is an important branch of operational research, and mainly studies how to find, by using an objective (or an objective function), an optimal solution that can minimize or maximize a function in a given area. Mathematical programming is widely used. Mathematical programming may be divided into many different branches based on differences in nature and processing methods of problems, such as linear programming, integer programming, nonlinear programming, combinatorial optimization, multi-objective programming, random programming, dynamic programming, and parameter programming. These problems are widely used in a plurality of fields such as supply chain, finance, transportation, and communication. To solve a mathematical programming problem, a dedicated software system, that is, a mathematical programming solver (which may also be referred to as a solver for short) is developed in the industry for linear, integer, mixed integer, and various nonlinear programming models.

Solution of mixed integer linear programming MILP problem is used as an example. In many real scenarios, problems always have integer constraints, such as production scheduling, supply chain, production scheduling, and factory site selection. Such problems usually may be modeled as mixed integer programming problems. Essence of solving an MILP problem is to obtain an optimal solution by solving a series of linear programming problems. Core steps of the solver for solving the MILP problem are as follows: (1) pre-solving (Presolve): deleting a redundant constraint and variable; (2) relaxation (Relaxation): obtaining an initial solution of a relaxation MILP problem; (3) branch (Branch): selecting a variable to solve a problem again based on the initial solution; and (4) cutting plane (Cut): generating a series of linear constraints based on the solution obtained after relaxation, and selecting some linear constraints and adding the selected linear constraints to an original problem to narrow down a feasible domain of the solution.

The solver includes a cutting plane module. The cutting plane module generates a series of constraints, which are referred to as a candidate cutting plane set. However, if all candidate cutting planes are added to a process of solving the objective function, a solution burden is increased, and a purpose of accelerating optimal solution cannot be achieved. Therefore, the cutting plane module needs to select a part of cutting planes from the set of these candidate cutting planes, and add the part of cutting planes to the process of solving the objective function. In the foregoing process of cutting plane selection, a feasible domain for searching for an optimal solution by using the objective function may be narrowed down to accelerate the optimal solution. The process of selection may also be referred to as cutting plane selection.

In a related technical solution, the foregoing process of cutting plane selection is performed according to a heuristic rule. In other words, in this technical solution, a plurality of evaluation indicators, for example, an objective parallelism degree, an integer support degree, and a distance to an optimal solution of linear programming, are designed based on expert knowledge. All the candidate cutting planes are scored, and finally a part of cutting planes with high scores are selected from the candidate cutting planes and added to the process of solving the objective function. Such a method is designed highly depending on the expert knowledge. If a cutting plane is selected from a candidate cutting plane set by using a same set of rules for all objective functions, a problem of poor rule universality exists, and solving performance of a corresponding objective function is not optimal. If a set of rules is specially designed for a type of objective functions, expert design costs are too high. This is unacceptable in actual application.

In view of this, an embodiment of this application provides a method for solving an objective function based on a cloud computing technology. In the method, a cutting plane set for an objective function in user data can be selected from a plurality of candidate cutting planes based on an AI model (which may also be referred to as a model below), thereby improving solving performance of the objective function.

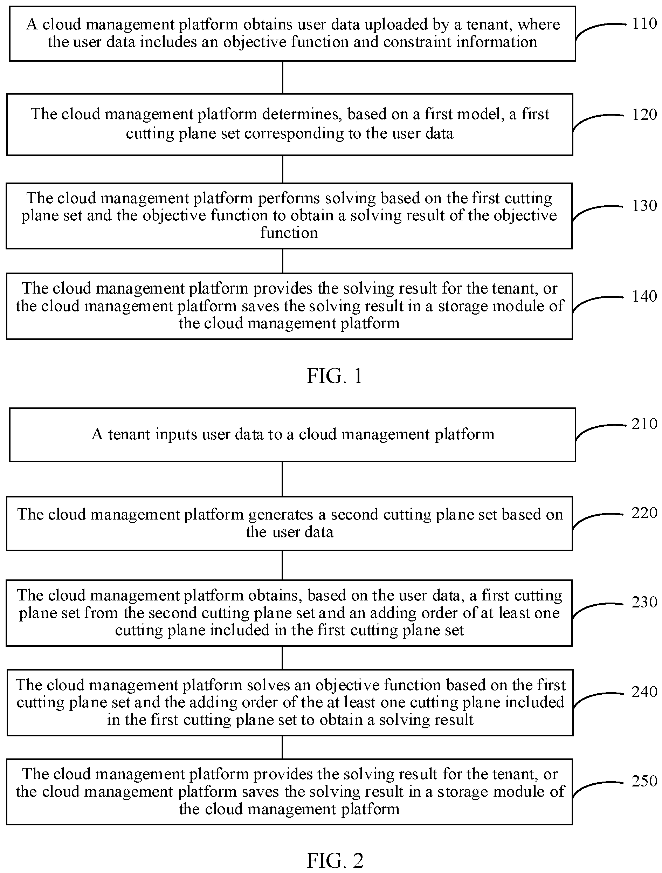

With reference to FIG. 1, a method for solving an objective function based on a cloud computing technology provided in an embodiment of this application is described in detail below.

FIG. 1 is a schematic flowchart of a method for solving an objective function based on a cloud computing technology according to an embodiment of this application. As shown in FIG. 1, the method is applied to a cloud management platform. The method may include steps 110 to 140. The following separately describes steps 110 to 140 in detail.

Step 110: The cloud management platform obtains user data uploaded by a tenant, where the user data includes an objective function and constraint information.

It should be understood that the cloud management platform is located in a cloud data center, and may provide an access interface (for example, an interface or an application programing interface (application programming interface, API)). The tenant may operate a remote access interface of a client to register a cloud account and a password on the cloud management platform, and log in to the cloud management platform. After the cloud management platform successfully authenticates the cloud account and the password, the tenant may further pay on the cloud management platform to select and purchase a virtual machine with a specific specification (a processor, a memory, or a disk). After the payment and purchase are successful, the cloud management platform provides a remote login account and password of the purchased virtual machine, and the client may remotely log in to the virtual machine, and install and run an application of the tenant in the virtual machine. Therefore, the tenant may create, manage, log in to, and operate the virtual machine in the cloud data center by using the cloud management platform. The virtual machine may also be referred to as a cloud server (elastic compute service, ECS) or an elastic instance (names may vary between different cloud service providers).

In this embodiment of this application, the cloud management platform obtains the user data uploaded by the tenant. Specifically, the tenant may upload the user data to the cloud management platform by using the client of the cloud management platform. The user data may include the objective function and the constraint information. The constraint information is used to constrain a variable in the objective function, and the objective function is a to-be-solved problem function.

Step 120: The cloud management platform determines, based on a first model, a first cutting plane set corresponding to the user data.

In this embodiment of this application, the cloud management platform may determine, based on the first model, the first cutting plane set corresponding to the objective function in the user data. The first cutting plane set includes at least one cutting plane. The first cutting plane set is a part of cutting planes selected by the first model from a plurality of candidate cutting planes. The plurality of candidate cutting planes are a plurality of constraints used to solve the objective function.

Optionally, before step 120, the method further includes: The cloud management platform determines the first model input or selected by the tenant.

It should be understood that the plurality of candidate cutting planes are determined by the cloud management platform based on the objective function and the constraint information that are included in the user data. Therefore, optionally, before step 120, the method further includes: The cloud management platform generates the plurality of candidate cutting planes based on the objective function and the constraint information that are included in the user data.

In an example, input information of the first model includes the user data and the plurality of candidate cutting planes, and output information of the first model includes the first cutting plane set. In an example, the first model is not specifically limited in this embodiment of this application, provided that a cutting plane selection proportion corresponding to the objective function can be determined. In a possible implementation, the first model may include but is not limited to any one of the following: a neural network model, a decision tree model, and a logistic regression model.

Optionally, before step 120, the cloud management platform may further perform model training to obtain the first model. For example, the cloud management platform may perform training based on the objective function, the constraint information, and the plurality of candidate cutting planes to obtain the first model. The following describes a model training process in detail. Therefore, details are not described herein.

Optionally, in some embodiments, in a specific implementation process in which the cloud management platform determines, based on the first model, the first cutting plane set corresponding to the user data, the cloud management platform may further determine, based on the first model, the cutting plane selection proportion corresponding to the objective function, and select the first cutting plane set from the plurality of candidate cutting planes based on the cutting plane selection proportion.

In an example, in the foregoing implementation, an input of the first model includes the objective function, the constraint information, and the plurality of candidate cutting planes, and the output information includes the cutting plane selection proportion corresponding to the objective function. Optionally, the cloud management platform may further perform model training to obtain the first model. For example, the cloud management platform may perform training based on the objective function, the constraint information, the plurality of candidate cutting planes, and the cutting plane selection proportion to obtain the first model. The following describes a model training process in detail. Therefore, details are not described herein.

Optionally, in some embodiments, the cloud management platform may further perform dimensionality reduction processing on the input of the first model, so that the first model performs model inference. In an example, the cloud management platform may perform dimensionality reduction processing on one or more of the following information: the objective function, the constraint information, and a second cutting plane set. For example, dimensionality reduction processing may be performed on the objective function based on a second model to obtain a low-dimensional representation of the objective function. For another example, dimensionality reduction processing is performed on the constraint information based on the second model to obtain a low-dimensional representation of the constraint information. For another example, dimensionality reduction processing is performed, based on the second model, on a plurality of candidate cutting planes included in the second cutting plane set to obtain low-dimensional representations of the plurality of candidate cutting planes.

It should be understood that the foregoing low-dimensional representation is a result obtained after dimensionality reduction processing is performed on information. For example, the low-dimensional representation of the objective function is a result obtained after dimensionality reduction processing is performed on the objective function.

For example, an example in which the low-dimensional representation of the objective function, the low-dimensional representation of the constraint information, and the low-dimensional representations of the plurality of candidate cutting planes are separately obtained is used. In this implementation process, the input of the first model includes the low-dimensional representation of the objective function, the low-dimensional representation of the constraint information, and the low-dimensional representations of the plurality of candidate cutting planes.

The second model is not specifically limited in this embodiment of this application, provided that dimensionality reduction processing (for example, feature extraction) can be implemented. In a possible implementation, the second model may include but is not limited to any one of the following: a graph convolutional neural network and a principal component analysis model.

In the foregoing technical solution, by performing an embedding representation on information by using the graph convolutional network, mathematical programming models of different sizes can be processed, and in addition, the solver is insensitive to input arrangement.

Optionally, the cloud management platform may further perform model training to obtain the second model. For example, the second model may be obtained through training based on one or more of the following information: the objective function and the low-dimensional representation of the objective function, the constraint information and the low-dimensional representation of the constraint information, and the plurality of candidate cutting planes and the low-dimensional representations of the plurality of candidate cutting planes.

Optionally, in some embodiments, the cloud management platform may further determine, based on a third model, an adding order of at least one cutting plane included in the first cutting plane set. An input of the third model includes the plurality of candidate cutting planes and the cutting plane selection proportion that corresponds to the objective function. The input of the third model is the plurality of candidate cutting planes and the cutting plane selection proportion that corresponds to the objective function. An output of the third model is the adding order of the at least one cutting plane included in the first cutting plane set.

The third model is not specifically limited in this embodiment of this application, provided that the adding order of the at least one cutting plane can be determined. In a possible implementation, the third model may include but is not limited to any one of the following: a pointer network model, a regression model, and a decision tree model.

Optionally, the cloud management platform may further perform model training to obtain the third model. For example, the cloud management platform may obtain the third model through training based on the plurality of candidate cutting planes, the cutting plane selection proportion corresponding to the objective function, and the adding order of the at least one cutting plane in the first cutting plane set.

Step 130: The cloud management platform performs solving based on the first cutting plane set and the objective function to obtain a solving result of the objective function.

In a possible implementation, a solver is deployed on the cloud management platform. The solver may perform solving based on the first cutting plane set and the objective function and the constraint information that are included in the user data to obtain the solving result of the objective function.

Step 140: The cloud management platform provides the solving result for the tenant, or the cloud management platform saves the solving result in a storage module of the cloud management platform.

In this embodiment of this application, after the cloud management platform obtains the solving result of the objective function, in a possible implementation, the cloud management platform may provide the solving result for the tenant. In another possible implementation, the cloud management platform may further save the solving result in the storage module of the cloud management platform.

Optionally, in some embodiments, the cloud management platform may further provide any one or a combination of the following information for the tenant: the cutting plane selection proportion corresponding to the objective function, the at least one cutting plane in the first cutting plane set, and the adding order of the at least one cutting plane.

With reference to FIG. 2, another method for solving an objective function based on a cloud computing technology provided in an embodiment of this application is described in detail below. It should be understood that an example in FIG. 2 is merely intended to help a person skilled in the art understand this embodiment of this application, instead of limiting this embodiment of this application to a specific value or a specific scenario of the example. A person skilled in the art can obviously make various equivalent modifications or changes based on the example in FIG. 2 provided below, and such modifications and changes also fall within the scope of embodiments of this application.

FIG. 2 is a schematic flowchart of another method for solving an objective function based on a cloud computing technology according to an embodiment of this application. As shown in FIG. 2, the method may include steps 210 to 250. The following separately describes steps 210 to 250 in detail.

Step 210: A tenant inputs user data to a cloud management platform.

In this embodiment of this application, the tenant may upload the user data to the cloud management platform through an access interface (for example, an interface or an API) of the cloud management platform. The user data may include but is not limited to an objective function and constraint information. The objective function is a problem to be solved by the tenant. The constraint information is constraint information input by the tenant for a variable in the objective function.

Step 220: The cloud management platform generates a second cutting plane set based on the user data.

In an example, a solver is deployed on the cloud management platform. The solver may generate a plurality of constraints based on the objective function and the constraint information in the user data. The plurality of constraints may also be referred to as a plurality of cutting planes. The plurality of cutting planes form the second cutting plane set. The second cutting plane set may also be referred to as a candidate cutting plane set. The candidate cutting plane set includes a plurality of candidate cutting planes. The plurality of candidate cutting planes are configured to further constrain a variable in the objective function based on a constraint input by the tenant.

It should be understood that the constraint information in step 210 is a constraint input by the tenant for the objective function. The plurality of candidate cutting planes included in the second cutting plane set in step 220 are extra constraints generated by the solver for the objective function. The extra constraints are used to further constrain the variable in the objective function to narrow down a solving range of an optimal solution to the objective function.

Step 230: The cloud management platform obtains, based on the user data, a first cutting plane set from the second cutting plane set and an adding order of at least one cutting plane included in the first cutting plane set.

In this embodiment of this application, the cloud management platform may obtain a proportion of cutting planes from the second cutting plane set based on the user data and an adding order of the proportion of cutting planes. The proportion of cutting planes may also be referred to as the first cutting plane set, and the first cutting plane set includes at least one cutting plane.

For example, the cloud management platform may determine a feature extraction model input or selected by the tenant, and obtain a low-dimensional representation of the objective function, a low-dimensional representation of the constraint information, and low-dimensional representations of the plurality of candidate cutting planes based on the feature extraction model. The cloud management platform may further determine a cutting plane adding proportion model input or selected by the tenant, and obtain, based on the cutting plane adding proportion model, a cutting plane selection proportion corresponding to the objective function. The cloud management platform may further determine a cutting plane adding order model input or selected by the tenant, and obtain, based on the cutting plane adding order model, the at least one cutting plane included in the first cutting plane set corresponding to the objective function and the adding order of the at least one cutting plane.

It should be understood that any AI model includes a training phase and an inference phase. The training phase is a process of calculating training data by using a specified initial model, and adjusting a parameter in the initial model by using a method based on a calculation result, so that the model gradually learns a rule and has a specific function. After training, an AI model with a stable function can be used for inference. In inference of an AI model, data in an actual application scenario is used as input data. An inference result can be obtained by the trained AI model through inference. The inference phase is actual application of the trained AI model, and can quickly use an AI capability to solve a specific technical problem.

The following first describes in detail a process in which the cloud management platform performs inference based on the foregoing models. For training processes of the foregoing models, refer to descriptions in the following embodiments. Details are not described herein.

### 1. Feature extraction model

The feature extraction model is configured to perform dimensionality reduction processing on the user data and a plurality of candidate cutting planes included in the second cutting plane set, for example, separately perform embedding (embedding) representation on the user data and the plurality of candidate cutting planes to obtain a plurality of candidate cutting planes obtained after dimensionality reduction and user data (including the objective function and the constraint information) obtained after dimensionality reduction. The feature extraction model is further configured to process the plurality of candidate cutting planes obtained after dimensionality reduction and the user data obtained after dimensionality reduction, to obtain a relationship between each candidate cutting plane and the user data based on the user data or an impact of the user data on each candidate cutting plane, that is, obtain a feature (the feature may be, for example, a group of vectors, which may be understood as a description of each candidate cutting plane) of each candidate cutting plane based on the user data.

It should be understood that the plurality of candidate cutting planes obtained after dimensionality reduction may also be referred to as low-dimensional embedding representations of the plurality of candidate cutting planes. The objective function obtained after dimensionality reduction may also be referred to as a low-dimensional embedding representation of the objective function.

In an example, an input of the feature extraction model is the user data including the objective function and the constraint information and the plurality of candidate cutting planes included in the second cutting plane set, and an output is a feature of each candidate cutting plane in the second cutting plane set. The following uses an example of the plurality of candidate cutting planes included in the second cutting plane set as an example to describe in detail a specific implementation process of performing embedding representation on the plurality of candidate cutting planes.

For example, in a possible implementation, the foregoing feature extraction model is implemented by using a graph convolutional neural network. The graph convolutional neural network is equivalent to a feature extractor, and is mainly used to perform embedding representation on high-dimensional mathematical programming model information (for example, the foregoing candidate cutting plane), that is, perform dimensionality reduction on the plurality of candidate cutting planes, to facilitate a downstream module or a downstream model to perform inference. Specifically, in an example, a plurality of pieces of candidate cutting plane information (A, b, C) are converted into a bipartite graph (bipartite graph), that is, (A, b, C) are filled based on a connection relationship. Then, the connection relationship in the bipartite graph is input into a graph convolutional network to obtain low-dimensional embedding representation information of a plurality of candidate cutting planes.

In this embodiment of this application, by performing an embedding representation on information by using the graph convolutional network, mathematical programming models of different sizes can be processed, and in addition, the solver is insensitive to input arrangement.

### 2. Cutting plane adding proportion model

The cutting plane adding proportion model is configured to adaptively learn an optimal selection proportion K of cutting planes based on objective functions in different user data. The optimal selection proportion K of cutting planes indicates that a part of cutting planes are selected from the plurality of candidate cutting planes included in the second cutting plane set. A proportion of the cutting planes in the second cutting plane set is K. In an example, an input of the cutting plane adding proportion model is a low-dimensional embedding representation of user data output by the feature extraction model and low-dimensional embedding representations of the plurality of candidate cutting planes, and an output of the cutting plane adding proportion model is the optimal selection proportion K of cutting planes.

For example, in a possible implementation, the cutting plane adding proportion model is implemented by using a fully connected neural network. Specifically, in an example, the low-dimensional embedding representation of the user data output by the feature extraction model and the low-dimensional embedding representations of the plurality of candidate cutting planes may be used as the input of the cutting plane adding proportion model. After the input information is processed by the fully connected neural network, the optimal selection proportion K of cutting planes is output. For example, after being processed by a self-encoder of the neural network, the low-dimensional embedding representation of the user data and the low-dimensional embedding representations of the plurality of candidate cutting planes are processed by a fully connected neural network to output the optimal selection proportion K of cutting planes that is determined based on a feature (for example, a feature of the objective function in the user data) of the user data and features of the plurality of candidate cutting planes.

In this embodiment of this application, compared with a fixed cutting plane selection proportion, the foregoing adaptive optimal cutting plane selection proportion K learned based on the feature of the objective function and the features of the candidate cutting planes can help learn a globally optimal cutting plane selection proportion, thereby achieving full search in an action full space, and avoiding falling into a local optimal solution.

### 3. Cutting plane adding order model

The cutting plane adding order model is configured to adaptively consider an arrangement order of a plurality of candidate cutting planes and remove a redundant cutting plane to obtain an optimal arrangement order of the plurality of candidate cutting planes. The cutting plane adding order model may further provide an optimal adding order of cutting planes of a specified quantity in the plurality of candidate cutting planes in a case of the optimal selection proportion K of cutting planes. In an example, the input of the cutting plane adding order model is the low-dimensional embedding representations of the plurality of candidate cutting planes that are output by the feature extraction model and the optimal selection proportion K of cutting planes that is output by the cutting plane adding proportion model, and the output of the cutting plane adding order model is the first cutting plane set. The first cutting plane set includes at least one cutting plane. The at least one cutting plane has an optimal arrangement order. A proportion of the first cutting plane set in the second cutting plane set is K.

For example, in a possible implementation, the cutting plane adding order model is implemented by using a pointer network. Specifically, in an example, the low-dimensional embedding representations of the plurality of candidate cutting planes that are output by the feature extraction model and the optimal selection proportion K of cutting planes that is output by the cutting plane adding proportion model may be used as an input of the pointer network. The pointer network may adaptively learn the optimal arrangement order of the plurality of candidate cutting planes based on the low-dimensional embedding representations of the plurality of candidate cutting planes, and output at least one cutting plane of a specified quantity (for example, the proportion K) from the plurality of arranged candidate cutting planes based on the optimal selection proportion K of cutting planes and a pointer. The at least one cutting plane has an optimal arrangement order. The at least one cutting plane forms the first cutting plane set.

In this embodiment of this application, compared with independently scoring each candidate cutting plane, the pointer network not only can remove similar redundant cutting planes from a plurality of candidate cutting planes based on a feature of each candidate cutting plane to dynamically and adaptively obtain the optimal arrangement order of the plurality of candidate cutting planes, but also can provide an adding order of optimal cutting planes of a specified quantity via the pointer network based on the dynamically and adaptively learned optimal selection proportion K of cutting planes.

Step 240: The cloud management platform solves the objective function based on the first cutting plane set and the adding order of the at least one cutting plane included in the first cutting plane set to obtain a solving result.

In a possible implementation, a solver is deployed on the cloud management platform. After obtaining the first cutting plane set and the adding order of the at least one cutting plane included in the first cutting plane set, the solver may add the at least one cutting plane in the adding order of the at least one cutting plane included in the first cutting plane set, and solve the objective function in the user data based on the constraint information in the user data and the at least one added cutting plane in the adding order of the at least one cutting plane to obtain the solving result. In an example, the solving result may be a determined optimal solution to the objective function.

Step 250: The cloud management platform provides the solving result for the tenant, or the cloud management platform saves the solving result in a storage module of the cloud management platform.

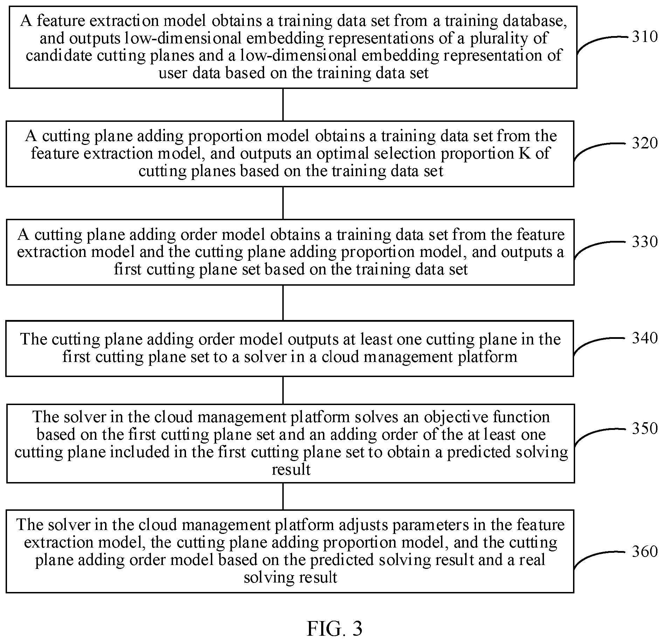

The following describes a training process of each model in detail with reference to FIG. 3. It should be understood that an example in FIG. 3 is merely intended to help a person skilled in the art understand this embodiment of this application, instead of limiting this embodiment of this application to a specific value or a specific scenario of the example. A person skilled in the art can obviously make various equivalent modifications or changes based on the example in FIG. 3 provided below, and such modifications and changes also fall within the scope of embodiments of this application.

It should be understood that any AI model needs to be trained before being used to resolve a specific technical problem. AI model training is a process of calculating training data by using a specified initial model, and adjusting a parameter in the initial model by using a method based on a calculation result, so that the model gradually learns a rule and has a specific function. After training, an AI model with a stable function can be used for inference.

In a training phase, a training set for the AI model first needs to be constructed based on an objective. The training set includes a plurality of pieces of training data, and a label is set for each piece of training data. The label of the training data is a correct answer of the training data to a specific question, and the label may represent an objective of training the AI model by using the training data. For example, when an AI model that can be used to identify different animals is to be trained, the training set may include images (that is, training data) of a plurality of different animals, and each image may have a label to identify a type of an animal included in the image, for example, a cat or a dog. In this example, the type of the animal corresponding to each image is the label of the training data.

When an AI model is trained, training data may be input into the AI model after parameter initialization is performed in batches. The AI model calculates (that is, infers) the training data to obtain a prediction result for the training data. The prediction result obtained through inference and the label corresponding to the training data are used as data for calculating a loss based on a loss function. The loss function is a function used to calculate, in the model training phase, a difference (that is, a loss value) between a prediction result of a model for training data and a label of the training data. The loss function may be implemented by using different mathematical functions. Common expressions of the loss function include a mean square error loss function, a logarithmic loss function, a least square method, and the like.

The loss value calculated based on the loss function may be used to update a parameter of the AI model. A specific parameter update manner is usually a gradient descent method. Model training is a process of repeated iterations. In each iteration, different training data is inferred and the loss value is calculated. An objective of a plurality of iterations is to continuously update the parameter of the AI model and find a parameter configuration that minimizes or gradually stabilizes the loss value of the loss function.

In the training phase, to make training efficiency of the model and performance of the trained model better, some proper hyperparameters need to be set for training. The hyperparameters of the AI model are a type of parameters that cannot be obtained by learning training data in a training process or that cannot change due to driving of training data, and are a concept relative to a parameter in the model. A deep learning model is used as an example. A hyperparameter of the model is usually manually set based on experience or an experiment. The hyperparameter includes a learning rate (learning rate), a batch sample size (batch size), a network structure hyperparameter (for example, a quantity of network layers (also referred to as depth), an interaction manner between network layers, a quantity of convolution kernels, a size of a convolution kernel, and an activation function), and the like.

FIG. 3 is a schematic flowchart of a model training method according to an embodiment of this application. As shown in FIG. 3, the method may include steps 310 to 360. The following describes steps 310 to 360 in detail.

Step 310: A feature extraction model obtains a training data set from a training database, and outputs low-dimensional embedding representations of a plurality of candidate cutting planes and a low-dimensional embedding representation of user data based on the training data set.

In this embodiment of this application, a tenant may input the user data (including an objective function and constraint information) into a solver, and the solver may generate the plurality of candidate cutting planes based on the user data. The solver may further store the user data (including the objective function and the constraint information) and the plurality of generated candidate cutting planes in the training data set.

In an example, the foregoing feature extraction model is a graph convolutional neural network, and a training data set input by the graph convolutional neural network includes the user data (including the objective function and the constraint information) and the plurality of candidate cutting planes. The graph convolutional neural network is configured to: perform dimensionality reduction processing on the user data and the plurality of candidate cutting planes, and output the low-dimensional embedding representations of the plurality of candidate cutting planes and low-dimensional embedding representation of the user data.

Step 320: A cutting plane adding proportion model obtains a training data set from the feature extraction model, and outputs an optimal selection proportion K of cutting planes based on the training data set.

For example, in a possible implementation, the cutting plane adding proportion model is a fully connected neural network. The cutting plane adding proportion model may obtain the low-dimensional embedding representation of the user data and the low-dimensional embedding representations of the plurality of candidate cutting planes from the feature extraction model. After the input information is processed by the fully connected neural network, the optimal selection proportion K of cutting planes is output.

Step 330: A cutting plane adding order model obtains a training data set from the feature extraction model and the cutting plane adding proportion model, and outputs a first cutting plane set based on the training data set.

For example, in a possible implementation, the cutting plane adding order model is a pointer network. An input of the cutting plane adding order model is the low-dimensional embedding representations of the plurality of candidate cutting planes that are output by the feature extraction model and the optimal selection proportion K of cutting planes that is output by the cutting plane adding proportion model. After the input information is processed by the pointer network, an adaptively learned optimal arrangement order of the plurality of candidate cutting planes is output, and the first cutting plane set of a specified quantity (for example, the proportion K) is output from the plurality of arranged candidate cutting planes based on the optimal selection proportion K of cutting planes and a pointer.

Step 340: The cutting plane adding order model outputs at least one cutting plane in the first cutting plane set to the solver in a cloud management platform.

Step 350: The solver in the cloud management platform solves the objective function based on the first cutting plane set and an adding order of the at least one cutting plane included in the first cutting plane set to obtain a predicted solving result.

After obtaining the first cutting plane set, the solver may add the at least one cutting plane in the adding order of the at least one cutting plane included in the first cutting plane set, and solve the objective function in the user data based on the constraint information in the user data and the at least one added cutting plane in the adding order of the at least one cutting plane to obtain the predicted solving result.

Step 360: The solver in the cloud management platform adjusts parameters in the feature extraction model, the cutting plane adding proportion model, and the cutting plane adding order model based on the predicted solving result and a real solving result.

In an example, in this embodiment of this application, the predicted solving result and the real solving result that corresponds to the objective function may be used as data for calculating a loss based on a loss function, and the parameters in the foregoing models are updated based on a loss value calculated based on the loss function. For example, data used by the loss function to calculate the loss may be an error between the predicted solving result and the real solving result, or may be a time difference between a time taken by the predicted solving result and a time taken by the real solving result.

After the parameters in the feature extraction model, the cutting plane adding proportion model, and the cutting plane adding order model are adjusted, the foregoing models may further perform iterative cyclic processing according to the method in steps 310 to 360. A parameter of each model is continuously adjusted based on a loss between the predicted solving result and the real solving result that corresponds to the objective function, until the loss that is between the predicted solving result and the real solving result and that is output by the solver is within an error range. This indicates that the foregoing models have a stable function after training, and may be used to perform the inference process shown in FIG. 2.

In this embodiment of this application, in a possible implementation, an AI basic development platform is deployed on the cloud management platform (which may also be referred to as a cloud platform for short), and the tenant may train the foregoing models on the AI basic development platform.

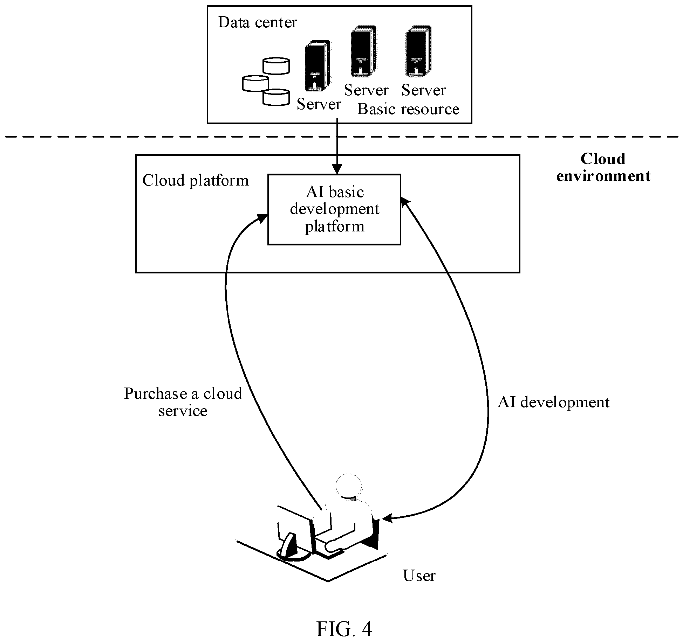

It should be understood that the AI basic development platform is a platform-as-a-service (platform-as-a-service, PaaS) cloud service in the cloud management platform, and is a software platform provided for a tenant (also referred to as a user, an AI developer, or the like) based on a large quantity of basic resources and software capabilities owned by a public cloud service provider to assist in AI model construction, training, and deployment, and AI application development and deployment. As shown in FIG. 4, a form of interaction between a tenant and an AI basic development platform mainly includes: The tenant logs in to the cloud platform on a client web page, and selects and purchases a cloud service of the AI basic development platform on the cloud platform. After the purchase, the tenant can perform full-process AI development based on a function provided by the AI basic development platform. The tenant develops and trains an AI model of the tenant on the AI basic development platform based on a basic resource (mainly a computing resource such as a central processing unit (central processing unit, CPU), a graphics processing unit (graphics processing unit, GPU), or an embedded neural network processor (neural-network process units, NPU)) in a data center of a cloud service provider. Therefore, when purchasing and using the AI basic development platform, the tenant mainly pays for a used resource.

For ease of description, the following uses a training process of the feature extraction model on the AI basic development platform as an example to describe a model training process on the AI basic development platform.

In an example, when the feature extraction model is trained on the AI basic development platform, a distributed parallel training manner may be used to improve training efficiency of the feature extraction model. There are two types of distributed parallel training for models: data parallelism and model parallelism.

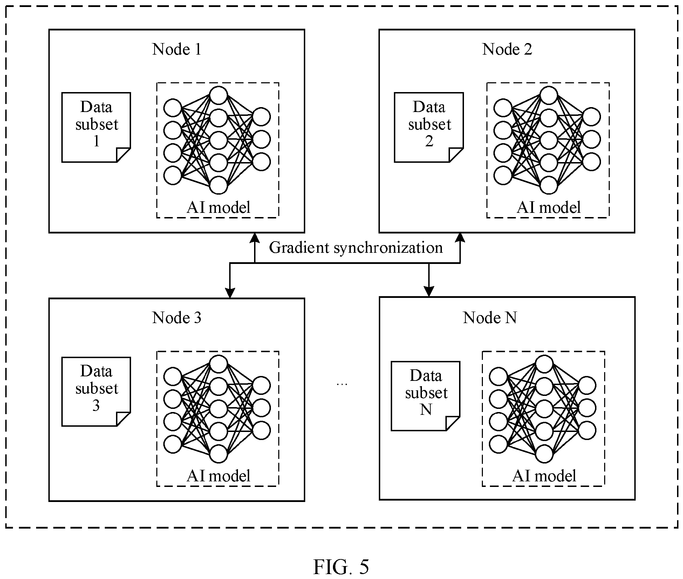

For example, as shown in FIG. 5, data parallelism specifically means that a same to-be-trained feature extraction model is deployed on a plurality of nodes (for example, nodes 1, 2, 3, ..., and N), a dataset used for training is divided into a plurality of data subsets, and the plurality of data subsets are distributed to the nodes. Each node independently uses data in a data subset corresponding to the node to train a feature extraction model in the node. In each training iteration process, a gradient value calculated by each node may be synchronized to another node, so that each node may obtain an average gradient value of one iteration process. The average gradient value is an average value of gradients of each node in a same iteration process. Each node may update a parameter of the feature extraction model of the node based on the average gradient value. This is equivalent to aggregating mini-batch data on many nodes to form a large batch of data to train the feature extraction model, so that a convergence speed of the feature extraction model is faster, and model training efficiency is improved. Each node may be a GPU, a virtual machine instance, or a container instance.

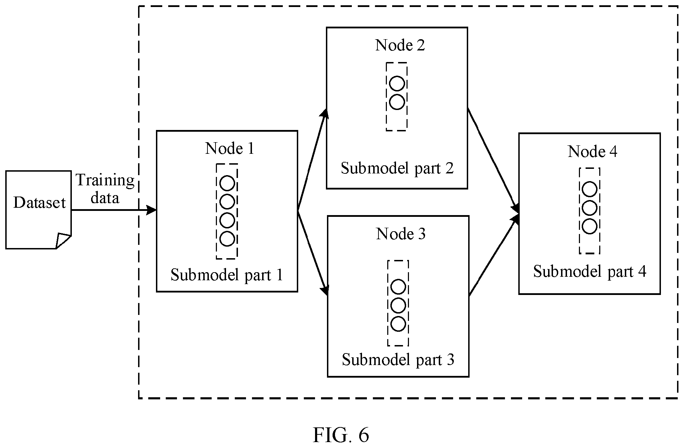

For another example, as shown in FIG. 6, model parallelism (also referred to as network parallelism) specifically means that one feature extraction model is segmented to obtain a plurality of submodel parts, and different submodel parts are deployed on different nodes. During training, the submodel parts on different nodes calculate same data in a dataset in a structure sequence of a model. In an iteration process, a gradient value may be calculated by submodel parts on different nodes, and a parameter of each submodel part may be updated by performing forward propagation or back propagation based on the gradient value. After a plurality of iterations, and a training requirement is met, submodel parts on all nodes are re-combined based on a structure of the feature extraction model to obtain a trained feature extraction model. When the feature extraction model is of a relatively large scale, the feature extraction model may be split for training, and the feature extraction model may be trained with reference to computing power of a plurality of nodes. Optionally, if the trained feature extraction model can also be deployed in a distributed manner based on a split structure, distributed inference is performed when the feature extraction model is used for inference.

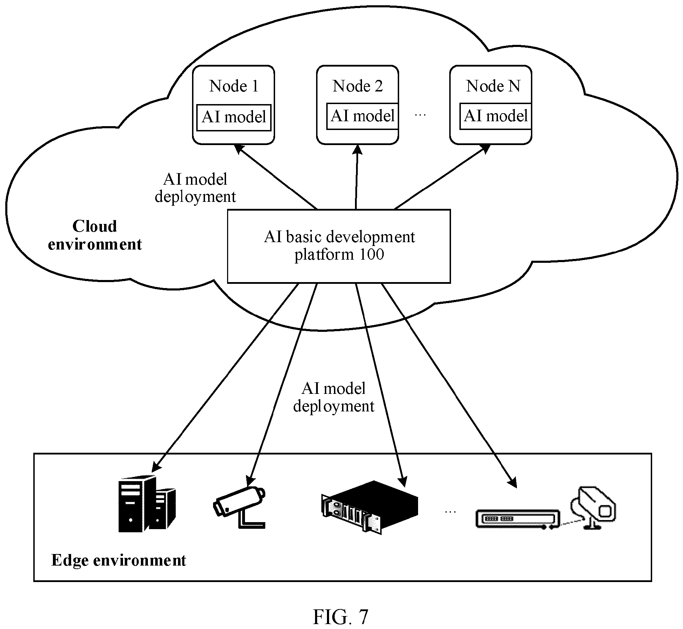

The AI basic development platform may further deploy the foregoing trained models (for example, the feature extraction model, the cutting plane adding proportion model, and the cutting plane adding order model) on nodes in a cloud environment or nodes in an edge environment. The nodes in the cloud environment may be a virtual machine instance, a container instance, a physical server, and the like. The nodes in the edge environment may be various edge devices. As shown in FIG. 7, in an example, when a scale of a model is relatively large, the model may be distributedly deployed on a plurality of nodes based on an idea of model parallelism. In another example, a model may alternatively be independently deployed on a plurality of nodes to support a relatively large access volume of an online service. In another example, the AI basic development platform may further deploy, based on an application requirement of an AI model, an AI application on an edge device registered with the cloud platform.

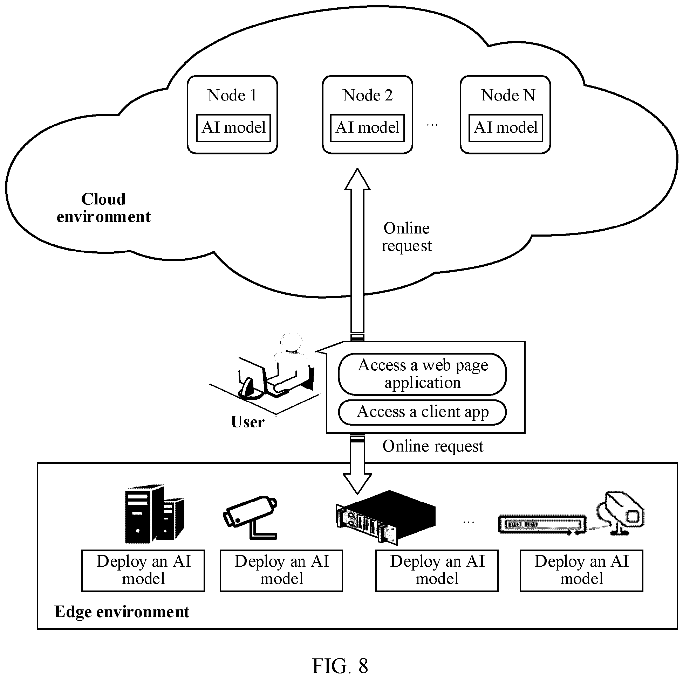

The deployed AI model may become an AI application or a part of an AI application. As shown in FIG. 8, a tenant may access an AI application online through a web page, or access an AI application online through a client app. When the AI application is used, the AI model deployed in the edge environment or the cloud environment may be invoked online to provide a response. In this way, the AI model developed and trained on the basic AI development platform can infer online request data and return an inference result.

When an AI model provides an online inference service, the AI basic development platform can continuously collect input and output data of the inference process, use the input and output data in the inference phase to enrich the training dataset, and optimize and train the AI model based on data in an inference phase and a corresponding manually confirmed result.

It should be understood that, in some other cases, the AI model developed and trained by the foregoing AI basic development platform may alternatively not be deployed online, but is provided for a tenant to download the trained AI model locally, so that the tenant can freely perform local deployment. For example, the tenant may save the trained AI model to an OBS and download the AI model from the OBS locally.

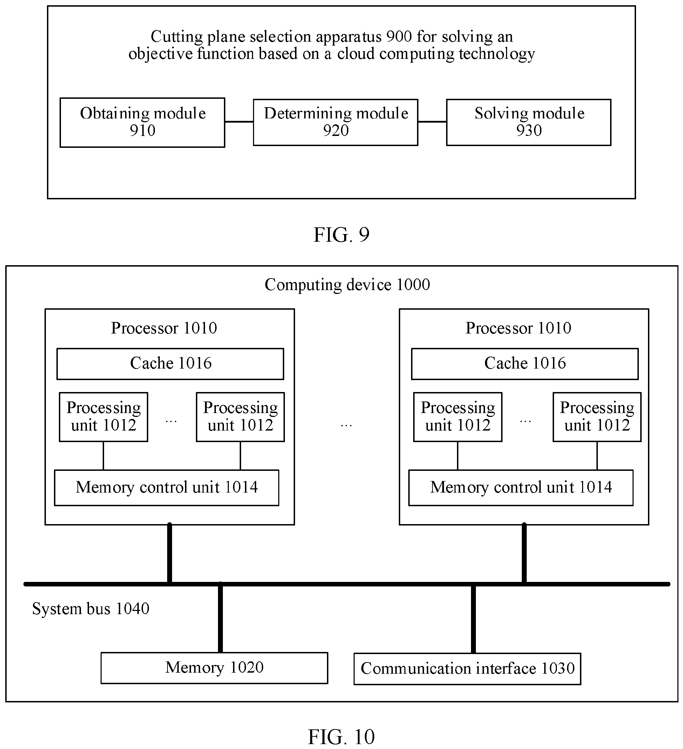

With reference to FIG. 1 to FIG. 8, the foregoing describes in detail the method for solving an objective function based on a cloud computing technology provided in embodiments of this application. The following describes detail the apparatus embodiments of this application with reference to FIG. 9 to FIG. 12. It should be understood that descriptions of the method embodiments correspond to descriptions of the apparatus embodiments. Therefore, for a part that is not described in detail, refer to the foregoing method embodiments.

FIG. 9 is a schematic block diagram of an apparatus 900 for solving an objective function based on a cloud computing technology according to an embodiment of this application. The apparatus 900 is used in a cloud management platform, and may be implemented by using software, hardware, or a combination thereof. The apparatus 900 for solving an objective function based on a cloud computing technology provided in this embodiment of this application can implement the method procedures shown in FIG. 1 to FIG. 3 in embodiments of this application. The apparatus 900 for solving an objective function based on a cloud computing technology includes: an obtaining module 910, a determining module 920, and a solving module 930. The obtaining module 910 is configured to obtain user data uploaded by a tenant, where the user data includes an objective function and constraint information. The determining module 920 is configured to determine, based on a first artificial intelligence AI model, a first cutting plane set corresponding to the user data, where the first cutting plane set is N cutting planes selected by the first AI model from M candidate cutting planes, the M candidate cutting planes are a plurality of constraints used to solve the objective function, M and N are positive integers, and N is less than M. The solving module 930 is configured to: perform solving based on the first cutting plane set and the objective function to obtain a solving result of the objective function, and provide the solving result for the tenant and/or save the solving result.

Optionally, the apparatus 900 further includes a generation module 940. The determining module 920 is further configured to determine the first AI model input or selected by the tenant. The generation module 940 is configured to generate the M candidate cutting planes based on the objective function and the constraint information. The determining module 920 is further configured to determine, based on the first AI model, a cutting plane selection proportion corresponding to the objective function, where an input of the first model includes the objective function, the constraint information, and the M candidate cutting planes. The determining module 920 is further configured to select the first cutting plane set from the M candidate cutting planes based on the cutting plane selection proportion.

Optionally, the first AI model is any one of the following: a neural network model, a decision tree model, and a logistic regression model.

Optionally, the apparatus 900 further includes: a dimensionality reduction module 950, configured to perform dimensionality reduction processing on the objective function based on a second AI model to obtain a low-dimensional representation of the objective function; and/or configured to perform dimensionality reduction processing on the constraint information based on the second AI model to obtain a low-dimensional representation of the constraint information; and/or configured to perform dimensionality reduction processing on the M candidate cutting planes based on the second AI model to obtain low-dimensional representations of the M candidate cutting planes.

Optionally, the input of the first AI model includes the low-dimensional representation of the objective function, the low-dimensional representation of the constraint information, and the low-dimensional representations of the M candidate cutting planes.

Optionally, the second AI model is any one of the following: a graph convolutional neural network and a principal component analysis model.

Optionally, the determining module 920 is further configured to determine, based on a third AI model, an adding order of the N cutting planes included in the first cutting plane set, where an input of the third AI model is the M candidate cutting planes and the cutting plane selection proportion that corresponds to the objective function.

Optionally, the third AI model is any one of the following: a pointer network model, a regression model, and a decision tree model.

Optionally, the apparatus 900 further includes: a sending module 960, configured to provide any one or a combination of the following information for the tenant: the cutting plane selection proportion corresponding to the objective function, the N cutting planes in the first cutting plane set, and the adding order of the N cutting planes.

Optionally, the first AI model is obtained by the cloud management platform through training based on the objective function, the constraint information, the M candidate cutting planes, and the cutting plane selection proportion that corresponds to the objective function.

The apparatus 900 herein may be embodied in a form of a functional module. The term "module" herein may be implemented in a form of software and/or hardware, and this is not specifically limited.

For example, the "module" may be a software program, a hardware circuit, or a combination thereof that implements the foregoing functions. For example, the following uses the obtaining module as an example to describe an implementation of the obtaining module. Similarly, for an implementation of another module, for example, the determining module, the solving module, or a processing module, refer to the implementation of the obtaining module.

The obtaining module is as an example of a software functional unit, and the obtaining module may include code run on a computing instance. The computing instance may include at least one of a physical host (computing device), a virtual machine, and a container. Further, there may be one or more computing instances. For example, the obtaining module may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The obtaining module is used as an example of a hardware functional unit, and the obtaining module may include at least one computing device such as a server. Alternatively, the obtaining module may be a device implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), or any combination thereof.

The plurality of computing devices included in the obtaining module may be distributed in a same region, or may be distributed in different regions. The plurality of computing devices included in the obtaining module may be distributed in a same AZ, or may be distributed in different AZs. Similarly, the plurality of computing devices included in the obtaining module may be distributed in a same VPC, or may be distributed in a plurality of VPCs. The plurality of computing devices may be any combination of computing devices such as a server, an ASIC, a PLD, a CPLD, an FPGA, and a GAL.

Therefore, modules in the examples described in embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such an implementation goes beyond the scope of this application.

It should be noted that when the apparatus provided in the foregoing embodiment performs the foregoing method, division into the foregoing functional modules is merely used as an example for description. During actual application, the foregoing functions may be allocated as required to different functional modules for implementation, that is, an internal structure of the apparatus is divided into different functional modules to implement all or some of the functions described above. For example, the obtaining module may be configured to perform any step in the foregoing method, the determining module may be configured to perform any step in the foregoing method, the solving module may be configured to perform any step in the foregoing method, and the processing module may be configured to perform any step in the foregoing method. Steps implemented by the obtaining module, the determining module, the solving module, and the processing module may be specified as required. The obtaining module, the determining module, the solving module, and the processing module separately implement different steps in the foregoing method to implement all functions of the foregoing apparatus.

In addition, the apparatus embodiments and the method embodiments provided in the foregoing embodiments belong to a same concept. For specific implementation processes thereof, refer to the method embodiments. Details are not described herein again.

The method provided in embodiments of this application may be performed by a computing device, and the computing device may also be referred to as a computer system. The computing device includes a hardware layer, an operating system layer running above the hardware layer, and an application layer running above the operating system layer. The hardware layer includes hardware such as a processing unit, a memory, and a memory control unit. Subsequently, functions and structures of the hardware are described in detail. The operating system is any one or more types of computer operating systems that implement service processing through a process (process), for example, a Linux operating system, a Unix operating system, an Android operating system, an iOS operating system, and a Windows operating system. The application layer includes application programs such as a browser, an address book, word processing software, and instant messaging software. In addition, optionally, the computer system is a handheld device such as a smartphone or a terminal device such as a personal computer. This is not particularly limited in this application, provided that the method provided in embodiments of this application can be implemented. The method provided in embodiments of this application may be performed by a computing device or a functional module in a computing device that can invoke and execute a program.

With reference to FIG. 10, the following describes in detail a computing device provided in an embodiment of this application.

FIG. 10 is a diagram of an architecture of a computing device 1000 according to an embodiment of this application. The computing device 1000 may be a server, a computer, or another device with a computing capability. The computing device 1000 shown in FIG. 10 includes at least one processor 1010 and memory 1020.

It should be understood that quantities of processors and memories in the computing device 1000 are not limited in this application.

The processor 1010 executes instructions in the memory 1020, so that the computing device 1000 implements the method provided in this application. Alternatively, the processor 1010 executes instructions in the memory 1020, so that the computing device 1000 implements the functional modules provided in this application to implement the method provided in this application.

Optionally, the computing device 1000 further includes a communication interface 1030. The communication interface 1030 uses a transceiver module, for example, but not limited to, a network interface card or a transceiver, to implement communication between the computing device 1000 and another device or a communication network.

Optionally, the computing device 1000 further includes a system bus 1040. The processor 1010, the memory 1020, and the communication interface 1030 are separately connected to the system bus 1040. The processor 1010 can access the memory 1020 through the system bus 1040. For example, the processor 1010 can read and write data or execute code in the memory 1020 through the system bus 1040. The system bus 1040 is a peripheral component interconnect express (peripheral component interconnect express, PCI) bus, an extended industry standard architecture (extended industry standard architecture, EISA) bus, or the like. The system bus 1040 is categorized as an address bus, a data bus, a control bus, or the like. For ease of representation, only one bold line is used for representation in FIG. 10, but this does not mean that there is only one bus or only one type of bus.

In a possible implementation, a function of the processor 1010 is mainly to interpret instructions (or code) of a computer program and process data in computer software. The instructions of the computer program and the data in the computer software can be stored in the memory 1020 or a cache 1016.

Optionally, the processor 1010 may be an integrated circuit chip and has a signal processing capability. By way of example but not limitation, the processor 1010 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor is a microprocessor or the like. For example, the processor 1010 is a central processing unit (central processing unit, CPU).

Optionally, each processor 1010 includes at least one processing unit 1012 and a memory control unit 1014.

Optionally, the processing unit 1012 is also referred to as a core (core) or a kernel, and is the most important component of the processor. The processing unit 1012 is made of monocrystalline silicon through a production process. All computation, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction level unit, and a bus interface.

In an implementation example, the memory control unit 1014 is configured to control data exchange between the memory 1020 and the processing unit 1012. Specifically, the memory control unit 1014 receives a memory access request from the processing unit 1012, and controls access to the memory based on the memory access request. By way of example but not limitation, the memory control unit is a device such as a memory management unit (memory management unit, MMU).

In an implementation example, each memory control unit 1014 performs addressing for the memory 1020 through the system bus. In addition, an arbiter (not shown in FIG. 10) is configured in the system bus, and the arbiter is responsible for processing and coordinating contention-based access of a plurality of processing units 1012.

In an implementation example, the processing unit 1012 and the memory control unit 1014 are communicatively connected through a connection line such as an address line in a chip, to implement communication between the processing unit 1012 and the memory control unit 1014.

Optionally, each processor 1010 further includes a cache 1016, and the cache is a data exchange buffer (referred to as a cache). When the processing unit 1012 needs to read data, the processing unit 1012 first searches the cache for the required data. If the data is found, the processing unit 1012 directly reads the data; or if the data is not found, the processing unit 1012 searches the memory for the data. Because the cache runs much faster than the memory, a function of the cache is to help the processing unit 1012 run faster.

The memory 1020 can provide running space for a process in the computing device 1000. For example, the memory 1020 stores a computer program (specifically, program code) used to generate the process. After the computer program is run by the processor to generate the process, the processor allocates corresponding storage space to the process in the memory 1020. Further, the storage space further includes a text segment, an initial data segment, an uninitialized data segment, a stack segment, a heap segment, and the like. The memory 1020 stores, in the storage space corresponding to the process, data generated during running of the process, for example, intermediate data or process data.

Optionally, the memory is also referred to as an internal storage, and a function of the memory is to temporarily store operation data in the processor 1010 and data exchanged with an external memory such as a hard disk drive. Provided that the computer runs, the processor 1010 schedules to-be-operated data to the memory for an operation, and the processing unit 1012 sends a result after the operation is completed.

By way of example but not limitation, the memory 1020 is a volatile memory or a nonvolatile memory, or may include both a volatile memory and a nonvolatile memory. The nonvolatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM) and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory 1020 of the systems and methods described in this specification is intended to include, but is not limited to, these and any memory of another proper type.

It should be understood that a structure of the foregoing enumerated computing device 1000 is merely an example for description, and this application is not limited thereto. The computing device 1000 in this embodiment of this application includes various hardware in a computer system in a conventional technology. For example, the computing device 1000 further includes a memory other than the memory 1020, for example, a magnetic disk memory. A person skilled in the art should understand that the computing device 1000 may further include another component necessary for implementing normal running. In addition, a person skilled in the art should understand that, based on a specific requirement, the computing device 1000 may further include a hardware component implementing another additional function. In addition, a person skilled in the art should understand that the computing device 1000 may include only a component required for implementing embodiments of this application, and does not need to include all the components shown in FIG. 10.

An embodiment of this application further provides a computing device cluster. The computing device cluster includes at least one computing device. The computing device may be a server. In some embodiments, the computing device may alternatively be a terminal device, for example, a desktop computer, a notebook computer, or a smartphone.

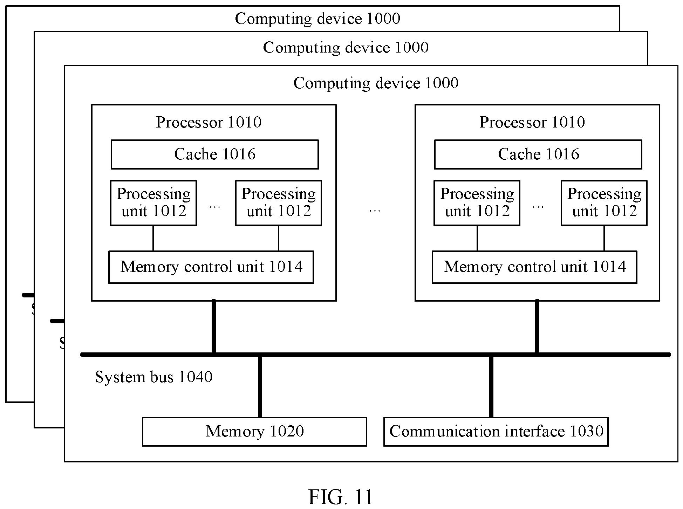

As shown in FIG. 11, the computing device cluster includes at least one computing device 1000. Memories 1020 of one or more computing devices 1000 in the computing device cluster may store same instructions used to perform the foregoing method.

In some possible implementations, the memories 1020 of the one or more computing devices 1000 in the computing device cluster may alternatively separately store some instructions used to perform the foregoing method. In other words, a combination of one or more computing devices 1000 may jointly execute instructions of the foregoing method.

It should be noted that memories 1020 of different computing devices 1000 in the computing device cluster may store different instructions respectively used to perform some functions of the foregoing apparatus. That is, the instructions stored in the memories 1020 in different computing devices 1000 may implement functions of one or more modules in the foregoing apparatus.

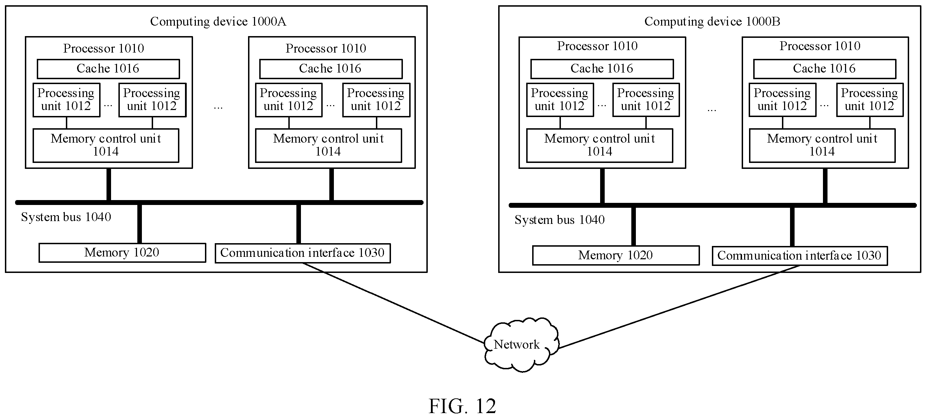

In some possible implementations, the one or more computing devices in the computing device cluster may be connected through a network. The network may be a wide area network, a local area network, or the like. FIG. 12 shows a possible implementation. As shown in FIG. 12, two computing devices 1000A and 1000B are connected through a network. Specifically, each computing device is connected to the network through a communication interface of the computing device.

It should be understood that functions of the computing device 1000A shown in FIG. 12 may alternatively be completed by a plurality of computing devices 1000. Similarly, functions of the computing device 1000B may alternatively be completed by a plurality of computing devices 1000.

In this embodiment, a computer program product including instructions is further provided. The computer program product may be software or a program product that includes the instructions and that can run on a computing device or that is stored in any usable medium. When the computer program product runs on the computing device, the computing device is enabled to perform the method provided above, or the computing device is enabled to implement functions of the apparatus provided above.

In this embodiment, a computer program product including instructions is further provided. The computer program product may be software or a program product that includes the instructions and that can run on a computing device cluster or that is stored in any usable medium. When the computer program product runs on the computing device cluster, the computing device cluster is enabled to perform the method provided above, or the computing device cluster is enabled to implement functions of the apparatus provided above.

In this embodiment, a computer-readable storage medium is further provided. The computer-readable storage medium may be any usable medium that can be stored by a computing device, or a data storage device such as a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. When the instructions in the computer-readable storage medium are executed on the computing device, the computing device is enabled to perform the method provided above.

In this embodiment, a computer-readable storage medium is further provided. The computer-readable storage medium may be any usable medium that can be stored by a computing device, or a data storage device such as a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. When the instructions in the computer-readable storage medium are executed by the computing device cluster, the computing device cluster is enabled to perform the method provided above.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that the units and algorithm steps of each example described with reference to embodiments disclosed herein can be implemented in electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such an implementation goes beyond the scope of this application.

A person skilled in the art can clearly understand that for convenient and brief description, for detailed working processes of the foregoing system, apparatus, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for solving an objective function based on a cloud computing technology, wherein the method is applied to a cloud management platform, and the method comprises:
Obtaining, by the cloud management platform, user data uploaded by a tenant, wherein the user data comprises an objective function and constraint information;
Determining, by the cloud management platform based on a first artificial intelligence AI model, a first cutting plane set corresponding to the user data, wherein the first cutting plane set is N cutting planes selected by the first AI model from M candidate cutting planes, the M candidate cutting planes are a plurality of constraints used to solve the objective function, M and N are positive integers, and N is less than M; and
Performing, by the cloud management platform, solving based on the first cutting plane set and the objective function to obtain a solving result of the objective function, and providing the solving result for the tenant and/or saving the solving result.

2. The method according to claim 1, wherein the method further comprises:
determining, by the cloud management platform, the first AI model input or selected by the tenant; and
generating, by the cloud management platform, the M candidate cutting planes based on the objective function and the constraint information; and
determining, by the cloud management platform based on a first model, the first cutting plane set corresponding to the user data comprises:
determining, by the cloud management platform based on the first AI model, a cutting plane selection proportion corresponding to the objective function, wherein an input of the first model comprises the objective function, the constraint information, and the M candidate cutting planes; and
selecting, by the cloud management platform, the first cutting plane set from the M candidate cutting planes based on the cutting plane selection proportion.

3. The method according to claim 1 or 2, wherein the first AI model is any one of the following: a neural network model, a decision tree model, and a logistic regression model.

4. The method according to any one of claims 1 to 3, wherein the method further comprises:
performing, by the cloud management platform, dimensionality reduction processing on the objective function based on a second AI model to obtain a low-dimensional representation of the objective function; and/or
performing, by the cloud management platform, dimensionality reduction processing on the constraint information based on the second AI model to obtain a low-dimensional representation of the constraint information; and/or
performing, by the cloud management platform, dimensionality reduction processing on the M candidate cutting planes based on the second AI model to obtain low-dimensional representations of the M candidate cutting planes.

5. The method according to claim 4, wherein the input of the first AI model comprises the low-dimensional representation of the objective function, the low-dimensional representation of the constraint information, and the low-dimensional representations of the M candidate cutting planes.

6. The method according to claim 4 or 5, wherein the second AI model is any one of the following: a graph convolutional neural network and a principal component analysis model.

7. The method according to any one of claims 2 to 6, wherein the method further comprises:
determining, by the cloud management platform based on a third AI model, an adding order of the N cutting planes comprised in the first cutting plane set, wherein an input of the third AI model is the M candidate cutting planes and the cutting plane selection proportion that corresponds to the objective function.

8. The method according to claim 7, wherein the third AI model is any one of the following: a pointer network model, a regression model, and a decision tree model.

9. The method according to any one of claims 1 to 8, wherein the method further comprises:
providing, by the cloud management platform, any one or a combination of the following information for the tenant: the cutting plane selection proportion corresponding to the objective function, the N cutting planes in the first cutting plane set, and the adding order of the N cutting planes.

10. The method according to any one of claims 1 to 9, wherein the first AI model is obtained by the cloud management platform through training based on the objective function, the constraint information, the M candidate cutting planes, and the cutting plane selection proportion that corresponds to the objective function.

11. An apparatus for solving an objective function based on a cloud computing technology, wherein the apparatus is used in a cloud management platform, and the apparatus comprises:
an obtaining module, configured to obtain user data uploaded by a tenant, wherein the user data comprises an objective function and constraint information;
a determining module, configured to determine, based on a first artificial intelligence AI model, a first cutting plane set corresponding to the user data, wherein the first cutting plane set is N cutting planes selected by the first AI model from M candidate cutting planes, the M candidate cutting planes are a plurality of constraints used to solve the objective function, M and N are positive integers, and N is less than M; and
a solving module, configured to: perform solving based on the first cutting plane set and the objective function to obtain a solving result of the objective function, and provide the solving result for the tenant and/or save the solving result.

12. The apparatus according to claim 11, wherein
the determining module is further configured to determine the first AI model input or selected by the tenant;
the apparatus further comprises:
a generation module, configured to generate the M candidate cutting planes based on the objective function and the constraint information;
the determining module is further configured to determine, based on the first AI model, a cutting plane selection proportion corresponding to the objective function, wherein an input of the first model comprises the objective function, the constraint information, and the M candidate cutting planes; and
the determining module is further configured to select the first cutting plane set from the M candidate cutting planes based on the cutting plane selection proportion.

13. The apparatus according to claim 11 or 12, wherein the first AI model is any one of the following: a neural network model, a decision tree model, and a logistic regression model.

14. The apparatus according to claim 13, wherein the apparatus further comprises:
a dimensionality reduction module, configured to perform dimensionality reduction processing on the objective function based on a second AI model to obtain a low-dimensional representation of the objective function; and/or
the dimensionality reduction module, further configured to perform dimensionality reduction processing on the constraint information based on the second AI model to obtain a low-dimensional representation of the constraint information; and/or
the dimensionality reduction module, further configured to perform dimensionality reduction processing on the M candidate cutting planes based on the second AI model to obtain low-dimensional representations of the M candidate cutting planes.

15. The apparatus according to claim 14, wherein the input of the first AI model comprises the low-dimensional representation of the objective function, the low-dimensional representation of the constraint information, and the low-dimensional representations of the M candidate cutting planes.

16. The apparatus according to claim 15, wherein the second AI model is any one of the following: a graph convolutional neural network and a principal component analysis model.

17. The apparatus according to any one of claims 12 to 16, wherein the determining module is further configured to:
determine, based on a third AI model, an adding order of the N cutting planes comprised in the first cutting plane set, wherein an input of the third AI model is the M candidate cutting planes and the cutting plane selection proportion that corresponds to the objective function.

18. The apparatus according to claim 17, wherein the third AI model is any one of the following: a pointer network model, a regression model, and a decision tree model.

19. The apparatus according to any one of claims 11 to 18, wherein the apparatus further comprises:
a sending module, configured to provide any one or a combination of the following information for the tenant: the cutting plane selection proportion corresponding to the objective function, the N cutting planes in the first cutting plane set, and the adding order of the N cutting planes.

20. The apparatus according to any one of claims 11 to 19, wherein the first AI model is obtained by the cloud management platform through training based on the objective function, the constraint information, the M candidate cutting planes, and the cutting plane selection proportion that corresponds to the objective function.

21. A computing device, comprising a processor and a memory, wherein the processor is configured to execute instructions stored in the memory, so that the computing device performs the method according to any one of claims 1 to 10.

22. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 10.

23. A computer program product comprising instructions, wherein when the instructions are run by a computing device, the computing device is enabled to perform the method according to any one of claims 1 to 10.

24. A computer program product comprising instructions, wherein when the instructions are run by a computing device cluster, the computing device cluster is enabled to perform the method according to any one of claims 1 to 10.

25. A computer-readable storage medium, comprising computer program instructions, wherein when the computer program instructions are executed by a computing device, the computing device performs the method according to any one of claims 1 to 10.

26. A computer-readable storage medium, comprising computer program instructions, wherein when the computer program instructions are executed by a computing device cluster, the computing device cluster performs the method according to any one of claims 1 to 10.
